# EUROPÄISCHE PATENTANMELDUNG

(11) **EP 1 361 397 A2**
(43) Veröffentlichungstag der Anmeldung: **12.11.2003**
(21) Anmeldenummer: 03009374.4
(22) Anmeldetag: 25.04.2003
(51) Int. Cl.: F24D 3/14

(54) **Höhenverstellbarer Abstandshalter zur Halterung von Heizrohrregistern und/oder -modulen in Betondecken und Betonböden und in Verfahren zum Verlegen**

(30) Priorität: 10.05.2002 DE 10220696
(71) Anmelder: REHAU AG + Co, 95111 Rehau (DE)
(72) Erfinder: Kübler, Rainer, 95111 Rehau (DE)

(57) **Zusammenfassung**

Lagestabile Halterung eines Heizrohrregisters und/oder -moduls (5a) innerhalb einer statisch neutralen Zone (3) in einer Betondecke (9) oder einem Betonboden (10), wobei ein einteilig ausgebildeter Abstandshalter (1) aus einer fußseitigen Aufnahmehalterung (2) für eine Befestigung an einer unteren Bewehrungslage (13) und aus einem in der Höhenlage (5b) variablen Aufnahmeelement (4) für ein Heizrohrregister und/oder -modul (5a) besteht und ein Verfahren zum Verlegen.

## Beschreibung

Die vorliegende Erfindung betrifft einen höhenverstellbaren Abstandshalter zur Halterung von Heizrohrregistern und/oder -modulen in Betondecken und Betonböden und ein Verfahren zum Verlegen.

Für den Gebäudebau werden vorgefertigte Betonböden oder -decken vom Betonwerk angeliefert oder vor Ort an der Baustelle fertiggestellt. In größeren Gebäudekomplexen werden die Betonböden oder die Betondecken eingebaut, in denen in der mittigen Horizontalebene - statisch neutrale Zone genannt - Heizrohrregister und/oder -module vorzugsweise im mäanderförmigen Verlauf verlegt sind und durch die ein Heiz- oder Kühlmedium zirkuliert , dass die Temperierung des Gebäudes erlaubt. Der Aufbau eines solchen Betonelements erfolgt durch eine Rohbaufirma, die eine untere Schalungsebene erstellt und auf diese untere Schalungsebene werden Distanzklötzchen zur Gewährleistung einer hinreichenden Einbettung der unteren Bewehrung unterlegt. Danach werden auf die untere Bewehrungslage so genannte Heizrohrregister und/oder -module aufgelegt, die aus großflächigen Trägermatten - in der Regel aus Baustahlmatten - mit vorkonfektionierten Heizrohren bestehen und an der unteren und der oberen Bewehrung im Abstand der gewählten neutralen Zone gehaltert oder befestigt, so dass der anschließende Verguss mit Beton oder Estrich erfolgen kann. Die hierzu notwendigen Abstandshalter für die Heizrohrregister und/oder -module sind im Stand der Technik in unterschiedlichen Ausführungsformen beschrieben.
In der Patentschrift DT 2264891 A1 werden Abstandshalter zum Stützen einer Bewehrung und einem Heizrohrregister für Betonbauteile beschrieben. Bei der bekannten Ausführung werden U- oder L-Bügel - auch U- oder L-Basisstreben genannt - zur Halterung der Bewehrungsgitter und der Heizrohrregister verwendet.

Nachteilig ist die kostenintensive Herstellung der U- und L-Basisstreben durch Punktschweißverfahren und deren Montage auf der Baustelle.

Die Patentschrift EP 0040681 A1 beschreibt eine Vorrichtung zur Halterung von Heizungsrohren und Bewehrungsgittern, die aus einem Fußabschnitt, einem Rohrhalterungsabschnitt und aus getrennt zusammensteckbaren Teilen bestehen. Diese bekannte Vorrichtung besitzt den Nachteil, dass die Halterung aus zwei zusammensteckbaren Elementen besteht und einen Höhenausgleich von miteinander in Verbindung gebrachten Bewehrungsgittern und/oder Heizrohrregistern erschwert wird und der Niveauausgleich zeit- und kostenintensiv unter Baustellenbedingungen erfolgen muss.

Die Patentschrift EP 0209618 A1 offenbart die Halterung von Heizungsrohren an der Unterseite der oberen Bewehrungsgitter. Die beschriebene Modulbauweise gewährleistet deren Verlegung in monolithischem Beton und verhindert ein Ausscheren und ein Aufschwimmen der Heizungsrohre durch den aufzufüllenden Estrich oder Beton. Diese bekannte Vorrichtung hat den Nachteil, dass die Halterung der Heizungsrohre durch Clipse in Verbindung mit Modulationsbändern erfolgt und die Fixierung der Bewehrungsgitter durch Abstandselemente in vierbeiniger Ausgestaltung keine variable höhenverstellbare Ausrichtung ermöglicht. Auftretende Biege- und/oder Zugspannungen an den Heizungsrohren, die an der Unterseite der Bewehrungsgitter befestigt sind, werden durch diese Vorrichtung nicht beseitigt. Nachteilig ist darüber hinaus, dass die beschriebene Vorrichtung keine Fixierung der Heizungsrohre in der statisch neutralen Zone über die gesamte Verlegefläche ermöglicht.

Aus dem Stand der Technik in DE 298 24 436 U1 und in DE 198 32 289 A1 ist eine Befestigung von Heizrohrregistern zum Schutz gegen ein Aufschwimmen aus der neutralen Zone bekannt. Die Befestigung der Heizrohrregister erfolgt mittels Kabelbinder und Drahtschlaufen an den Querträgern der Abstandsböcke, die nicht variabel in der Höhe einstellbar sind. Für den Fall einer Änderung der Deckenstärke eines Gebäudestockwerkes, müssen für eine Nivellierung in der Höhe unterschiedliche Abstandsböcke hergestellt werden, die zusätzliche Kosten verursachen.

Nachteilig ist auch die nicht zu verhindernde Scherkraftwirkung bei Einbringung des Estrichs oder Betons und der Folge, dass das Heizrohrregister dieser Scherkraft unterworfen wird , so dass Biege- und Zugspannungen auftreten, die zu Beschädigungen an den Heizrohrregistern führen können.

Des weiteren ist aus DE 3906729 eine Höhenaufhängung der Heizrohrregister an speziellen Haken mit unterschiedlichen Höhenlagen bekannt. Als Nachteil erweist sich , dass eine veränderte Deckenstärke unterschiedliche Hakenlängen zum Niveauausgleich der Fixierung in einer neutralen Ebene erfordert und der Montageaufwand arbeits- und zeitintensiv unter Baustellenbedingungen erfolgen muss.

Bei den vorgenannten Konstruktionen werden die gitterförmigen Träger, auf denen die Heizrohrregister und/oder -module befestigt sind, mittels Abstandshalter an der oberen und/oder der unteren Bewehrung so gehaltert, dass ein durch Auftrieb bedingtes Aufschwimmen und Ausscheren der luftgefüllten Heizrohrregister und/oder - module aus einer bevorzugten neutralen Zone während eines Auffüllvorgangs der Boden- oder der Deckenkonstruktion mit Beton oder Estrich nicht zu verhindern ist.

Aufgabe der vorliegenden Erfindung ist es, Heizrohrregister und/oder -module hinsichtlich der Höhenlage entlang einer statisch neutralen Zone in Betondecken oder Betonböden lagestabil zu haltern.

Diese Aufgabe wird erfindungsgemäß durch den kennzeichnenden Teil des Patentanspruchs 1 gelöst.

Weitere Ausgestaltungen der Erfindung, sowie ein Verfahren zum Verlegen, ergeben sich aus weiteren Unteransprüchen.

Gemäß einem ersten Gesichtspunkt umfasst die erfindungsgemäße Konstruktion eine Anzahl höhenverstellbarer Abstandshalter, die jeweils durch ein Aufnahmeelement an der unteren Bewehrung gehaltert werden und die großflächigen Heizrohrregister und/oder -module an einem variabel höhenverstellbaren Positionsraster mit Höhenskalierung am Abstandshalter aufnehmen, so dass ein Aufschwimmen des Heizrohrregisters oder -moduls aus der statisch neutralen Zone während des Vergussvorgangs mit Beton oder Estrich nicht erfolgen kann.
Erfindungsgemäß werden die höhenverstellbaren Abstandshalter, jeweils angepasst an die geometrische Form der Heizrohrregister und/oder -module und deren flächengemäße Ausdehnung, mit der unteren Bewehrung und dem Heizrohrregister und/oder -modul gehaltert. Die Heizrohrregister und/oder -module werden im Wesentlichen entlang der unteren Bewehrung über die gesamte Fläche lagestabil und höhenausgerichtet befestigt, ohne dass hierzu zusätzliche Befestigungsmittel wie Clipse oder Kabelbinder erforderlich sind.
Der erfindungsgemäße höhenverstellbare Abstandshalter zeichnet sich ferner dadurch aus, dass der Abstand der Heizrohrregister und/oder -module zum unteren Bewehrungsgitter durch angebrachte Positionsraster mit Höhenskalierung im Zentimetermaßstab nach Vorgaben ausgemessen und vormontiert eingestellt werden und ein Niveauausgleich auf der Baustelle noch durch eine Anpassung der Positionsrasterhöhen an dem höhenverstellbaren Abstandhalter vorgenommen werden kann. Die Heizrohrregister und/oder -module sind somit schnell in der ausgerichteten Höhenlage vormontiert verlegbar.

Vorteilhaft ist auch, dass durch eine geeignete Beabstandung der höhenverstellbaren Abstandshalter eine beliebige Fläche mit fixierten Heizrohrregistern und/oder -modulen in einheitlicher Höhe oder angepasst an örtliche Baustellengegebenheiten verlegt werden kann.
Da es sich bei dem erfindungsgemäßen höhenverstellbaren Abstandshalter um ein Konstruktionsteil handelt, das nicht an den statischen Eigenschaften der fertiggestellten Betonkonstruktion beteiligt ist, können die erfindungsgemäßen höhenverstellbaren Abstandshalter aus preiswerten Materialien, wie Kunststoff oder Metall oder in einer Materialkombination aus Metall und Kunststoff, hergestellt werden.

Eine besondere vorteilhafte Ausgestaltung eines höhenverstellbaren Abstandhalters sieht vor, dass dieser aus einem polymeren Material oder recycelbaren polymeren Material besteht und durch konventionelle, aus dem Stand der Technik bekannte, Spritzguss- oder Extrusionsverfahren hergestellt werden kann.

Nachfolgend wird die Erfindung anhand eines Ausführungsbeispiels näher beschrieben, das schematisch in der Zeichnung dargestellt ist. Grundsätzlich kommt die Konstruktion gemäß der Erfindung mit einem unteren Bewehrungsgitter aus und ein Heizrohrregister und/oder -modul wird durch die höhenverstellbaren Abstandshalter in der Fläche ortsfest und in der Höhenlage lagestabil gehaltert. Die konstruktiven Merkmale des erfindungsgemäßen höhenverstellbaren Abstandshalter gewährleisten in vorteilhafter Weise einen Schutz gegen ein Aufschwimmen der Heizrohrregister und/oder -module aus einer statisch neutralen Zone beim Verguss mit Beton oder Estrich, da die Heizrohrregister und/oder -module sicher und lagestabil in den Abstandshaltern gehaltert sind.
Insbesondere die im Stand der Technik beschriebenen Kräfte, die ebene Scherbewegungen der gehalterten Heizrohrregister und/oder -module während des Vergussvorgangs mit Beton oder Estrich bedingen, werden erfindungsgemäß durch die vorteilhafte Anordnung verhindert.
Es entsteht somit eine Betondecken- oder Betonbodenkonstruktion, die hinsichtlich der Lage der Heizrohrregister und/oder -module eine bevorzugte statisch neutrale Ebene gewährleistet und dadurch die Voraussetzung der optimalen Wärmeübertragungsbedingung im Betrieb ermöglicht und angepasst an die örtlichen Gegebenheiten zu einer gewünschten homogenen Wärmeverteilung in der Betondecke oder dem Betonboden führt, so dass keine nachteilig wirkenden thermischen Belastungsgradienten während des Betriebes der Heizrohrregister und/oder -module entstehen.

Weiterhin betrifft die Erfindung ein Verfahren zum Verlegen eines Heizrohrregisters und/oder -moduls mit höhenverstellbaren Abstandshaltern der genannten Art, umfassend folgende Schritte:
- Verbinden der höhenverstellbaren Abstandshalter der vorbeschriebenen Art mit einem Heizrohrregister und/oder -modul,
- Voreinstellen der Höhenlage des Heizrohrregisters und/oder -moduls an der Positionsrasterung der höhenverstellbaren Abstandshalter,
- Einbringen der Heizrohrregister und/oder -module samt daran verbundenen höhenverstellbaren Abstandshalter in eine untere Bewehrungslage,
- Befestigung der unteren Bewehrungslage an den höhenverstellbaren Abstandshaltern fußseitig an einer Aufnahmehalterung,
- Einbringen einer oberen Bewehrungslage,
- Vergießen mit Beton oder Estrich.

Bei dieser Erfindungsausgestaltung werden zunächst die höhenverstellbaren Abstandshalter an dem Heizrohrregister und/oder -modul verbunden bzw. an diesem befestigt, wonach die Voreinstellung der Höhenlage der Heizrohrregister und/oder - module an der Positionsrasterung der höhenverstellbaren Abstandshalter erfolgt und das Heizrohrregister und/oder -modul samt höhenverstellbarer Abstandshalter in die untere Bewehrungslage eingebracht wird, so dass eine Befestigung der höhenverstellbaren Abstandshalter fußseitig an einer Aufnahmehalterung an der unteren Bewehrungslage erfolgt und die Heizrohrregister und/oder -module in einer statisch neutralen Zone gehaltert werden; nachfolgend erfolgt das Einbringen einer oberen Bewehrungslage und das Vergießen mit Beton oder Estrich.

Eine alternative Verfahrensausgestaltung zum Verlegen eines Heizrohrregisters und/oder -moduls mit höhenverstellbaren Abstandshaltern umfasst demgegenüber folgende Schritte:
- Einbringen einer unteren Bewehrungslage,
- Verbinden der höhenverstellbaren Abstandshalter der vorbeschriebenen Art an einer Aufnahmehalterung fußseitig an der unteren Bewehrungslage,
- Auflegen des Heizrohrregisters und/oder -moduls auf die untere Bewehrungslage,
- Anheben des Heizrohrregisters und/oder -moduls und Verbinden des Heizrohrregisters und/ oder -moduls mit den höhenverstellbaren Abstandshaltern ,
- Einstellen der Höhenlage des Heizrohrregisters und/oder -moduls an der Positionsrasterung der höhenverstellbaren Abstandshalter,
- Einbringen der oberen Bewehrung,
- Vergießen mit Beton oder Estrich.

Bei dieser Erfindungsgestaltung wird eine untere Bewehrungslage eingebracht und es erfolgt die Verbindung der höhenverstellbaren Abstandshalter an einer Aufnahmehalterung fußseitig an der unteren Bewehrungslage und das Heizrohrregister und/oder -modul wird nach dem Auflegen auf die untere Bewehrungslage angehoben und anschließend mit den höhenverstellbaren Abstandshaltern verbunden. Die Einstellung der Höhenlage des Heizrohrregisters und/oder -moduls erfolgt im nächsten Schritt an der Positionsrasterung der höhenverstellbaren Abstandshalter. Nachfolgend wird die obere Bewehrungslage eingebracht und die Heizrohrregister und/oder - module, die in einer statisch neutralen Zone gehaltert sind, mit Beton oder Estrich vergossen.

Insgesamt bietet der höhenverstellbare Abstandshalter zum einen eine einfache Montage- und Positionierungsmöglichkeit für Heizrohrregister und/oder -module, zum anderen wird ein verbesserter Schutz gegen ein Aufschwimmen der Heizrohrregister und/oder -module beim Vergießen mit Beton oder Estrich erreicht, da die Heizrohrregister und/oder -module sicher und in einer Höhe entlang der statisch neutralen Zone gehaltert sind.

Das Heizrohrregister und/oder -modul unter Verwendung der erfindungsgemäßen höhenverstellbaren Abstandshalter gewährleistet die Positionierung, die Halterung und die Auftriebsicherung der Heizrohrregister und/oder -module, da keine zusätzlichen Elemente oder handwerkliche Maßnahmen erforderlich sind und grenzt sich damit zum Stand der Technik wesentlich ab.

Weitere Vorteile, Merkmale und Einzelheiten der Erfindung ergeben sich aus den im Folgenden beschriebenen Ausführungsbeispielen sowie anhand der Zeichnungen. Dabei zeigen
- Fig. 1: Eine Darstellung eines erfindungsgemäßen höhenverstellbaren Abstandshalters.
- Fig. 2: Eine Halterungsebene eines Heizrohrregister und/oder -moduls in der bevorzugten statisch neutralen Ebene mit mehreren erfindungsgemäßen höhenverstellbaren Abstandshaltern einer Betondecke oder eines Betonbodens im Schnitt.

In den Figuren bezeichnen gleiche Bezugszeichen identische oder gleichwirkende Elemente.

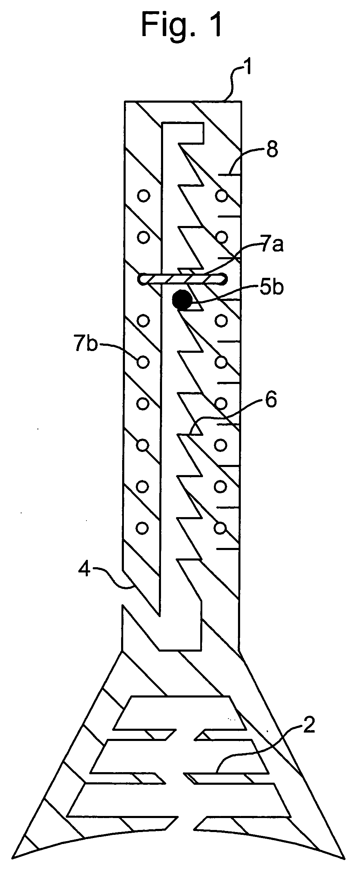

Fig. 1 zeigt einen erfindungsgemäßen höhenverstellbaren Abstandshalter 1, bestehend aus einer fußseitigen Aufnahmehalterung 2 für die Befestigung an der unteren Bewehrung 13 und dem Aufnahmeelement 4 für das Heizrohrregister und/oder - modul 5a. Das Heizrohrregister und/oder -modul 5a wird höhenverstellbar an einer Positionsrasterung 6 gehaltert und durch ein Anschlagelement 7a gegen ein oberseitiges Ausscheren des Heizrohrregister und/oder -moduls 5a aus der vorgesehenen Höhenlage 5b gesichert. Vorgesehene Öffnungen 7b erlauben die Befestigung des Anschlagelements 7a . Die Positionsrasterung 6 ist mit einer Höhenskalierung 8 versehen, so dass eine gleichmäßige Einstellung der Höhenlage 5b des Heizrohrregisters und/oder -moduls 5a durch mehrere in der Fläche angeordneter Abstandshalter 1 erfolgen kann. Die Höhenskalierung 8 ist im Zentimetermaßstab eingeteilt und gewährleistet bauseitig eine Vormontage der Heizrohrregister und/oder -module 5a in der gewünschten Positionsrasterstellung 6 der vorgesehen Höhenlage 5b.

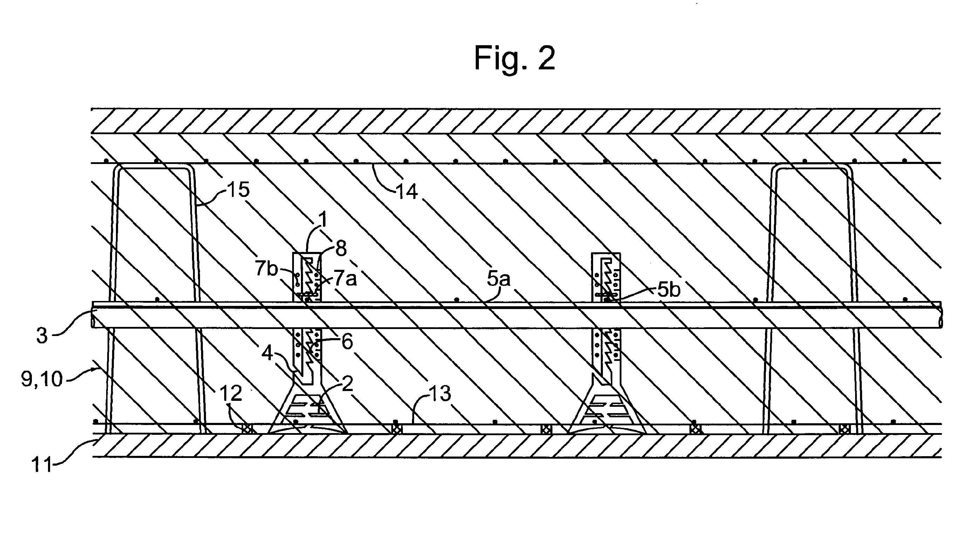

Fig. 2 zeigt eine erfindungsgemäße Betondecke 9 oder einen Betonboden 10 im fertig gegossenen, jedoch noch in der Schalung befindlichen Zustand. Auf eine untere Schalungsebene 11 sind in Längenabständen Distanzelemente 12 aufgelegt, auf die eine untere Bewehrungslage 13, in der Regel Baustahlmatten, aufgelegt werden. Die höhenverstellbaren Abstandshalter 1 mit dem im Aufnahmeelement 4 gehalterten Rohrregister und/oder -modul 5a in der vorgesehenen Höhenlage 5b werden an der unteren Bewehrungslage 13 an der fußseitigen Aufnahmehalterung 2 des höhenverstellbaren Abstandshalters 1 befestigt und stehen lagestabil auf der unteren Schalungsebene 11. Die Höhenlage 5b des Heizrohrregisters und/oder -moduls 5a ist entlang der statisch neutralen Zone 3 gewählt.

Ein Distanzkorb 15 zur Halterung der oberen Bewehrungslage 14 steht auf der unteren Schalungsebene 11 und gewährleistet die Auflage der oberen Bewehrungslage 14. Die erfindungsgemäße Konstruktion der Betondecke 9 oder des Betonbodens 10 gewährleistet, dass ein Aufschwimmen der Heizrohrregister und/oder -module 5a aus einer eingestellten Höhenlage 5b aus einer statisch neutralen Zone 3 während des Vergießens mit Beton oder Estrich durch die höhenverstellbaren Abstandshalter 1 nicht erfolgen kann. Insgesamt wird auf diese Weise eine lagestabile Halterung von Heizrohrregistern und/oder -modulen entlang einer statisch neutralen Zone in Betondecken oder Betonböden möglich.

### Bezugszeichen

- 1: Höhenverstellbarer Abstandshalter
- 2: Fußseitige Aufnahmehalterung
- 3: Statisch neutrale Zone
- 4: Aufnahmeelement
- 5a: Heizrohrregister und/oder -modul
- 5b: Höhenlage
- 6: Positionsrasterung
- 7a: Anschlagelement
- 7b: Öffnung
- 9: Betondecke
- 10: Betonboden
- 11: Untere Schalungsebene
- 12: Distanzelemente
- 13: Untere Bewehrungslage
- 14: Obere Bewehrungslage
- 15: Distanzkorb

## Patentansprüche

1. Lagestabile Halterung eines Heizrohrregisters und/oder -moduls (5a) entlang einer statisch neutralen Zone (3) in einer Betondecke (9) oder einem Betonboden (10), **dadurch gekennzeichnet, dass** ein einteilig ausgebildeter Abstandshalter (1) aus einer fußseitigen Aufnahmehalterung (2) für eine Befestigung an einer unteren Bewehrungslage (13) und einem in der Höhenlage (5b) variablen Aufnahmeelement (4) für ein Heizrohrregister und/oder -modul (5a) besteht.

2. Abstandshalter nach Anspruch 1, **dadurch gekennzeichnet, dass** das Aufnahmeelement (4) zur Höhenpositionierung eines Heizrohrregisters und/oder - moduls (5a) in einer Höhenlage (5b) eine Positionsrasterung (6) aufweist.

3. Abstandshalter nach Anspruch 1 und 2, **dadurch gekennzeichnet, dass** das Heizrohrregister und/oder -modul (5a) in einer Höhenlage (5b) gegen ein oberseitiges Ausscheren durch ein Anschlagelement (7a) gesichert ist und in einer Öffnungen (7b) gehaltert ist.

4. Abstandshalter nach Anspruch 1 bis 3 **dadurch gekennzeichnet, dass** die Positionsrasterung (6) eine Höhenskalierung (8) im Zentimetermaßstab zur Höhenausrichtung eines Heizrohrregisters und/oder -moduls (5a) aufweist.

5. Abstandshalter nach Anspruch 1 bis 3, **dadurch gekennzeichnet, dass** der Abstandshalter (1) aus Kunststoff, vorzugsweise aus einem polymeren Material oder aus einem recycelbaren Kunststoff oder recycelbaren polymeren Material besteht.

6. Abstandshalter nach Anspruch 1 bis 5, **dadurch gekennzeichnet, dass** der Abstandshalter (1) aus Metall oder aus einer Materialkombination Metall und Kunststoff besteht.

7. Betondecke (9) oder Betonboden (10), umfassend wenigstens ein eingeschlossenes Heizrohrregister und/oder -modul (5a), das an ebenfalls eingegossenen Abstandshaltern (1 ) nach einem der Ansprüche 1 bis 6 gehaltert ist.

8. Verfahren zum Verlegen eines Heizrohrregisters und/oder -moduls (5a) nach Anspruch 7, umfassend folgende Schritte:
- Verbinden der Abstandshalter (1) nach einem der Ansprüche 1 bis 4 mit einem Heizrohrregister und/oder -modul (5a),
- Einstellen der Höhenlage (5b) des Heizrohrregisters und/oder -moduls (5a) an der Positionsrasterung (6) der Abstandshalter (1),
- Einbringen der Heizrohrregister und/oder -module (5a) samt verbundenen Abstandshaltern (1) in eine untere Bewehrungslage (13),
- Befestigung der unteren Bewehrungslage (13) an den höhenverstellbaren Abstandshalter (1) in einer fußseitigen Aufnahmehalterung (2),
- Einbringen der Distanzkörbe (15) zur Auflage einer oberen Bewehrungslage (14)
- Vergießen mit Beton oder Estrich.

9. Verfahren zum Verlegen eines Heizrohrregisters und/oder -moduls (5a) nach Anspruch 7 , umfassend folgende Schritte:
- Einbringen einer unteren Bewehrungslage (13),
- Verbinden der fußseitigen Aufnahmehalterung (2) des Abstandshalters (1) an der unteren Bewehrungslage (13),
- Auflegen des Heizrohrregisters und/oder -moduls (5a) auf die untere Bewehrungslage (13),
- Verbinden des Heizrohrregisters und/oder -moduls (5a) nach einem der Ansprüche 1 bis 4 mit dem Aufnahmeelement (4) des Abstandshalters (1),
- Einstellen der Höhenlage (5b) des Heizrohrregisters und/oder -moduls (5a) an der Positionsrasterung (6) der Abstandshalter (1),
- Einbringen der Distanzkörbe (15) zur Auflage einer oberen Bewehrungslage (14)
- Vergießen mit Beton oder Estrich.
